Europäisches Patentamt

European Patent Office

Office européen des brevets

(19)

(11) Veröffentlichungsnummer: **0 347 543 B1**

# EUROPÄISCHE PATENTSCHRIFT

(12)

(45) Veröffentlichungstag der Patentschrift:
11.09.91 Patentblatt 91/37

(51) Int. Cl.⁵: **G01B 21/22, G01B 11/26,**
G01D 5/36

(21) Anmeldenummer: **89106924.7**

(22) Anmeldetag: **18.04.89**

(54) Abgeschirmte Winkelmesseinrichtung in direktem Anbau an einer Antriebseinheit.

(30) Priorität: **22.04.88 DE 3813610**

(43) Veröffentlichungstag der Anmeldung:
**27.12.89 Patentblatt 89/52**

(45) Bekanntmachung des Hinweises auf die
Patenterteilung:
**11.09.91 Patentblatt 91/37**

(84) Benannte Vertragsstaaten:
**AT CH DE ES FR GB IT LI NL SE**

(56) Entgegenhaltungen:
**EP-A- 0 231 385**
**US-A- 4 605 853**

(73) Patentinhaber: **Dr. Johannes Heidenhain GmbH**
**Dr.-Johannes-Heidenhain-Strasse 5 Postfach 1260**
**W-8225 Traunreut (DE)**

(72) Erfinder: **Hofbauer, Hermann, Dipl.-Ing. (FH)**
**Feichtener-Strasse 19**
**W-8221 Tacherting (DE)**

EP 0 347 543 B1

## Beschreibung

Die Erfindung betrifft eine Winkelmeßeinrichtung in direktem Anbau an einer Antriebseinheit gemäß dem Oberbegriff des Anspruchs 1.

Derartige Einrichtungen werden insbesondere bei Bearbeitungsmaschinen zur Messung der Relativlage eines Werkzeugs bezüglich eines zu bearbeitenden Werkstücks eingesetzt.

Aus der EP-A1-0231385 ist eine Winkelmeßeinrichtung in direktem Anbau an einer Antriebseinheit zur Messung der relativen Winkellage zweier zueinander drehbarer Objekte bekannt, bei der in einem Gehäuse die Winkelteilung einer mittels einer Welle drehbar gelagerten Teilscheibe von einer Abtasteinrichtung abgetastet wird, die ein Abtastelement und eine nachgeschaltete Auswerteeinheit aufweist. Die Abtasteinrichtung ist mittels eines Isolierstücks elektrisch isoliert an der Antriebseinheit angebaut ; das Gehäuse ist am Isolierstück befestigt und gemeinsam mit der Abtasteinrichtung mit dem Massepotential der Auswerteeinheit verbunden.

Bei einer derartigen Einrichtung können durch die Ansteuerung der Antriebseinheit bedingte hochfrequente Störsignale auf das vom Abtastelement erzeugte Abtastsignal einkoppeln, so daß die aus dem Abtastsignal gebildeten Meßwerte für die relative Winkellage der beiden Objekte fehlerbehaftet sein können. Da das Gehäuse mit dem Massepotential der Auswerteeinheit verbunden ist, kann es durch die Einkopplung besagter Störsignale auf das Gehäuse zu Verschiebungen dieses Massepotentials kommen, die sich auf die unter Verwendung dieses Massepotentials in der Auswerteeinheit gebildeten Meßwerte nachteilig auswirken können.

Der Erfindung liegt die Aufgabe zugrunde, eine Einrichtung der genannten Gattung so auszubilden, daß die von der Ansteuerung der Antriebseinheit ausgehenden Störsignale keine nachteiligen Auswirkungen auf die von der Abtasteinrichtung gebildeten Meßwerte haben.

Diese Aufgabe wird erfindungsgemäß durch die kennzeichnenden Merkmale des Anspruchs 1 gelöst.

Die mit der Erfindung erzielten Vorteile bestehen insbesondere darin, daß durch die vorgeschlagenen Maßnahmen auf einfache Weise die Störsicherheit wesentlich erhöht wird, so daß einwandfreie Meßwerte für die Relativlage der beiden Objekte ungeachtet der durch der Ansteuerung der Antriebseinheit auftretenden hochfrequenten Störsignale gewonnen werden.

Vorteilhafte Ausbildungen der Erfindung entnimmt man den abhängigen Patentansprüchen.

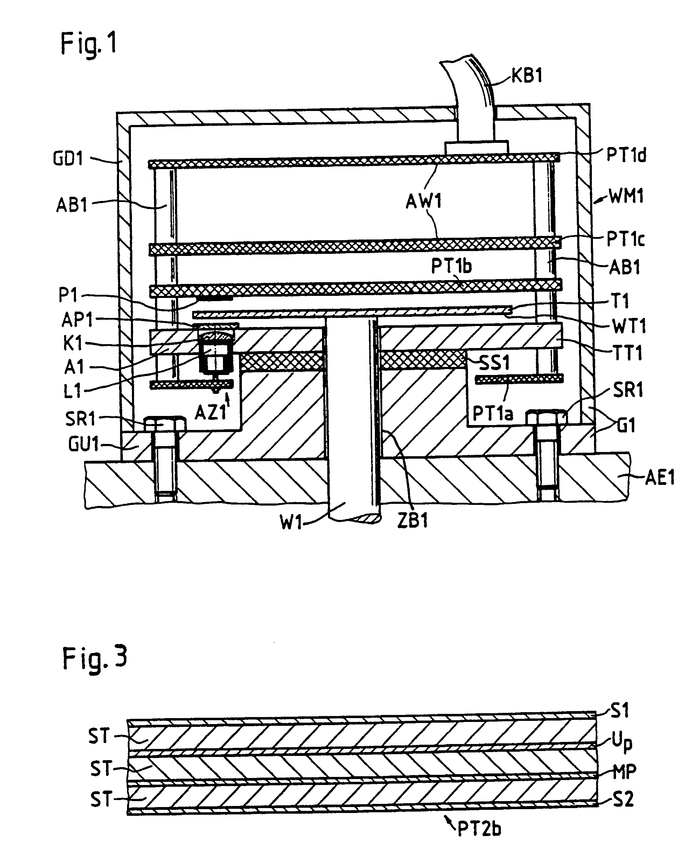

Ausführungsbeispiele werden anhand der Zeichnung näher erläutert, wobei die Anordnung nach Figur 1 nicht beansprucht ist.

Es zeigen

Figur 1     eine inkrementale Winkelmeßeinrichtung in direktem Anbau an einer Antriebseinheit im Querschnitt,

Figur 2     eine absolute Winkelmeßeinrichtung in direktem Anbau an einer Antriebseinheit im Querschnitt und

Figur 3     eine Mehrlagenplatine im Ausschnitt.

In Figur 1 ist eine inkrementale Winkelmeßeinrichtung WM1 in direktem Anbau an einer Antriebseinheit AE1 gezeigt. Ein Gehäuse G1 der Winkelmeßeinrichtung WM1 besteht aus einem Gehäuseunterteil GU1 und aus einem Gehäusedeckel GD1. Das Gehäuseunterteil GU1 ist mittels Schrauben SR1 an der Antriebseinheit AE1 in elektrischem Kontakt angebaut und weist eine zentrale Bohrung ZB1 auf, durch die eine Antriebswelle W1 der Antriebseinheit AE1 in das Innere des Gehäuses G1 hineinragt.

Im Inneren des Gehäuses G1 ist am Ende der Welle W1 eine kreisförmige Teilscheibe T1 befestigt, deren Winkelteilung WT1 von einem lichtelektrischen Abtastelement AZ1 einer Abtasteinrichtung A1 abgetastet wird. Dieses Abtastelement AZ1 enthält eine Lichtquelle L1, einen Kondensor K1 sowie eine Abtastplatte AP1 mit einer Abtastteilung, die an einem Trägerteil TT1 der Abtasteinrichtung A1 angeordnet sind. Mittels Abstandsbolzen AB1 sind parallel zum Trägerteil TT1 vier Platinen PT1a-PT1d angeordnet ; während die erste Platine PT1a die Stromversorgungsleitungen für die Lichtquelle L1 aufweist, enthält die zweite Platine PT1b das Photoelement P1 des Abtastelements AZ1 zur Erzeugung eines periodischen Abtastsignals. Aus diesem periodischen Abtastsignal werden in einer Auswerteeinheit AW1 auf der dritten Platine PT1c und der vierten Platine PT1d die Meßwerte für die relative Winkellage zweier zueinander drehbarer Objekte gewonnen ; diese beiden nicht gezeigten Objekte können durch zwei Maschinenteile einer Bearbeitungsmaschine gebildet sein, an der die Antriebseinheit AE1 und die Winkelmeßeinrichtung WM1 angeordnet sind.

Mit der vierten Platine PT1d ist ein elektrisches Kabel KB1 verbunden, das die Stromversorgungsleitungen für das Abtastelement AZ1 und die Auswerteeinheit AW1 der Abtasteinrichtung A1 enthält. Zur Gewährleistung der Störsicherheit gegen die Einkopplung von Störsignalen in die Abtasteinrichtung A1 und insbesondere in die Auswerteeinheit AW1, die durch die Ansteuerung der Antriebseinheit AE1 bewirkt werden, ist neben der bereits erwähnten elektrisch leitenden Verbindung des Gehäuses G1 der Winkelmeßeinrichtung WM1 mit der Antriebseinheit AE1 das elektrisch leitfähige Trägerteil TT1 der Abtasteinrichtung A1 mittels einer Isolierschicht SS1 elektrisch isoliert am Gehäuseunterteil GU1 der Winkelmeßeinrichtung WM1 befestigt und mit dem Massepotential der Auswerteeinheit AW1 elektrisch leitend verbunden. Für den Abschirmeffekt wird das Trägerteil TT1 als möglichst geschlossene Fläche ausgebildet. Die Massepotentiale der vier Platinen PT1a-PT1d sind über die elektrisch leitenden Abstandsbolzen AB1 miteinander so niederohmig wie möglich verbunden. Der Abstand dieser Massepotentiale zum Gehäuse G1 (Luftstrecken und Kriechstrecken) wird so groß gewählt, daß eine Beeinträchtigung der Störsicherheit durch elektrische Überschläge vermieden und eine ausreichende Spannungsfestigkeit erzielt wird.

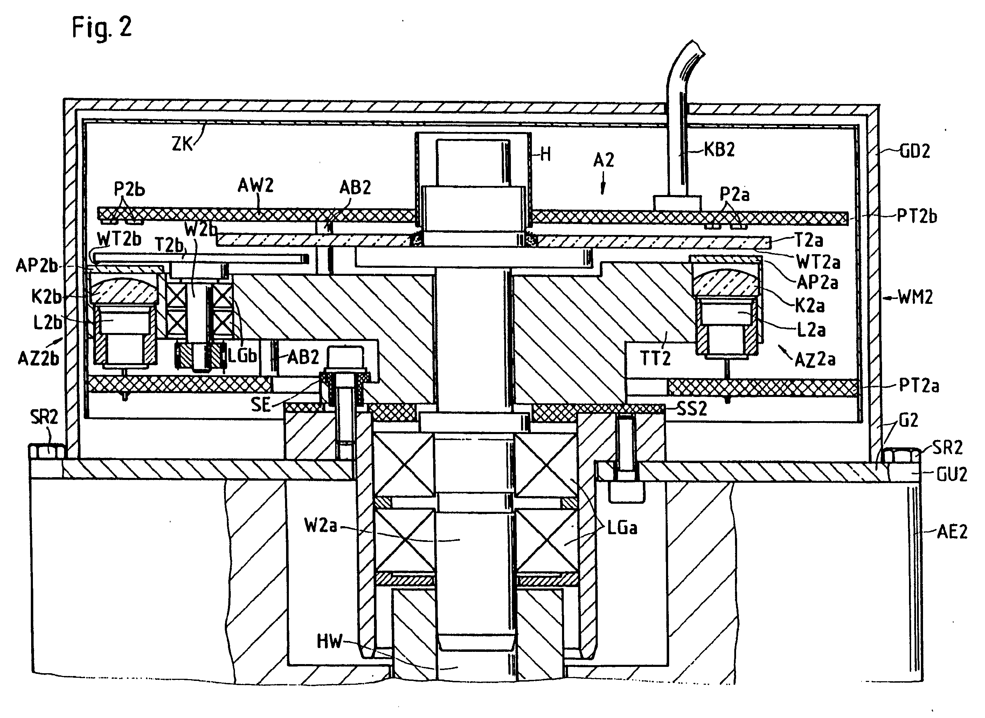

In Figur 2 ist eine absolute mehrstufige Winkelmeßeinrichtung WM2 in direktem Anbau an einer Antriebseinheit AE2 gezeigt. Ein Gehäuse G2 der Winkelmeßeinrichtung WM2 besteht aus einem Gehäuseunterteil GU2 und aus einem Gehäusedeckel GD2. Das Gehäuseunterteil GU2 ist mittels Schrauben SR2 an der Antriebseinheit AE2 in elektrischem Kontakt angebaut. Eine im Gehäuseunterteil GU2 mittels erster Lager LGa drehbare erste Welle W2a greift in eine Hohlwelle HW der Antriebseinheit AE2 ein und wird mit dieser verbunden.

Im Inneren des Gehäuses G2 ist am Ende der ersten Welle W2a eine erste kreisförmige Teilscheibe T2a mit einer ersten Winkelteilung WT2a in Form mehrerer Feincodespuren befestigt ; diese erste Winkelteilung WT2a wird von einem ersten lichtelektrischen Abtastelement AZ2a einer Abtasteinrichtung A2 abgetastet. Dieses erste Abtastelement AZ2a enthält eine erste Lichtquelle L2a, einen ersten Kondensor K2a sowie eine erste Abtastplatte AP2a mit einer ersten Abtastteilung, die an einem Trägerteil TT2 der Abtasteinrichtung A2 angeordnet sind. Parallel zur ersten Welle W2a ist im Trägerteil TT2 eine zweite Welle W2b mittels zweiter Lager LGb drehbar gelagert und weist an ihrem Ende eine zweite kreisförmige Teilscheibe T2b mit einer zweiten Winkelteilung WT2b in Form mehrerer Grobcodespuren auf ; diese zweite Winkelteilung WT2b wird von einem zweiten lichtelektrischen Abtastelement AZ2b in der Abtasteinrichtung A2 abgetastet. Dieses zweite Abtastelement AZ2b enthält eine zweite Lichtquelle L2b, einen zweiten Kondensor K2b sowie eine zweite Abtastplatte AP2b mit einer zweiten Abtastteilung, die am Trägerteil TT2 der Abtasteinrichtung A2 angeordnet sind.

Mittels Abstandsbolzen AB2 sind parallel zum Trägerteil TT2 zwei Platinen PT2a, PT2b angeordnet ; während die erste Platine PT2a die Stromversorgungsleitungen für die erste Lichtquelle L2a und die zweite Lichtquelle L2b aufweist, enthält die zweite Platine PT2b die ersten Photoelemente P2a des ersten Abtastelements AZ2a und die zweiten Photoelemente P2b des zweiten Abtastelements AZ2b zur Erzeugung von binären Abtastsignalen, aus denen in einer Auswerteeinheit AW2 auf der zweiten Platine PT2b die Meßwerte für die relative Winkellage zweier zueinander drehbarer Objekte gewonnen werden ; diese beiden nicht gezeigten Objekte können durch zwei Maschinenteile einer Bearbeitungsmaschine gebildet sein, an der die Antriebseinheit AE2 und die Winkelmeßeinrichtung WT2 angeordnet sind.

Mit der zweiten Platine PT2b ist ein elektrisches Kabel KB2 verbunden, das die Stromversorgungsleitungen für das erste Abtastelement AZ2a und für das zweite Abtastelement AZ2b sowie für die Auswerteeinheit AW2 der Abtasteinrichtung A2 enthält. Zur Gewährleistung der Störsicherheit gegen die Einkopplung von Störsignalen in die Abtasteinrichtung A2 und insbesondere in die Auswerteeinheit AW2, die durch die Ansteuerung der Antriebseinheit AE2 bewirkt werden, ist erfindungsgemäß neben der bereits erwähnten elektrisch leitenden Verbindung des Gehäuses G2 der Winkelmeßeinrichtung WM2 mit der Antriebseinheit AE2 das elektrisch leitfähige Trägerteil TT2 der Abtasteinrichtung A2 mittels einer Isolierschicht SS2 und eines Isolierelements SE elektrisch isoliert am Gehäuseunterteil GU2 der Winkelmeßeinrichtung WM2 befestigt und mit dem Massepotential der Auswerteeinheit AW2 elektrisch leitend verbunden. Für den Abschirmeffekt wird das Trägerteil TT2 als möglichst geschlossene Fläche ausgebildet. Die Massepotentiale der beiden Platinen PT2a, PT2b sind über die elektrisch leitenden Abstandsbolzen AB2 miteinander so niederohmig wie möglich verbunden. Der Abstand dieser Massepotentiale zum Gehäuse G2 (Luftstrecken und Kriechstrecken) wird so groß gewählt, daß eine Beeinträchtigung der Störsicherheit durch elektrische Überschläge vermieden und eine ausreichende Spannungsfestigkeit erzielt wird.

Eine zusätzliche Kappe ZK aus elektrisch leitfähigem Material oder aus einem innen metallisierten Kunststoff die beiden Platinen PT2a, PT2b und das Trägerteil TT2 umgibt ; diese zusätzliche Kappe ZK ist ebenfalls mit dem Massepotential der Auswerteeinheit AW2 verbunden. Das freie Ende der ersten Welle W2a der Winkelmeßeinrichtung WM2 ist mit einer elektrisch leitenden Hülse H abgeschirmt, die gleichfalls an das Massepotential der Auswerteeinheit AW2 angeschlossen ist. Das Gehäuse G2 der Winkelmeßeinrichtung WM2 braucht wegen der erfindungsgemäßen Maßnahmen nicht mehr mit dem Schirm des elektrischen Kabels KB2 verbunden zu werden, was bei der Anwendung der Winkelmeßeinrichtung WM2 auch nicht immer möglich ist.

In Figur 3 ist im Ausschnitt die zweite Platine PT2b der Figur 2 als Mehrlagenplatine mit zwei äußeren strukturierten Metallschichten S1, S2 und zwei inneren ganzflächigen Metallschichten UP, MP dargestellt, zwischen denen sich drei Isolierschichten ST befinden. Die äußere strukturierte Metallschicht S1 enthält beispielsweise als gedruckte Schaltung die Leiterbahnen für die Signalleitungen der ersten Photoelemente P2a und die äußere strukturierte Metallschicht S2 die Leiterbahnen für die Signalleitungen der zweiten Photoelemente P2b. Die innere ganzflächige Metallschicht UP bildet die Zuleitung für die Versorgungsspannung und die innere ganzflächige Metallschicht MP die Zuleitung für das Massepotential. Durch die ganzflächige Metallschicht MP wird eine zusätzliche Abschirmwirkung erzielt.

Unter Massepotential wird ein Bezugspotential verstanden, das bevorzugt 0 Volt, jedoch auch andere Werte, z.B. 5 Volt, betragen kann.

## Patentansprüche

1. Winkelmeßeinrichtung in direktem Anbau an einer Antriebseinheit (AE) zur Messung der relativen Winkellage zweier zueinander drehbarer Objekte, bei der in einem Gehäuse (G) die Winkelteilung wenigstens einer mittels einer Welle (W) drehbar gelagerten Teilscheibe (T) von einer Abtasteinrichtung (A) abgetastet wird, die wenigstens ein Abtastelement (AZ) und eine nachgeschaltete Auswerteeinheit (AW) aufweist, und bei der eine Abschirmung der Abtasteinrichtung gegen elektrische Störeinflüsse vorgesehen ist, gekennzeichnet durch die Vereinigung folgender Merkmale :

  a)  das Gehäuse (G) ist in elektrischem Kontakt an der Antriebseinheit (AE) angebaut ;
  b)  die Abtasteinrichtung (A) ist elektrisch isoliert im Gehäuse (G) befestigt ;
  c)  die Abtasteinrichtung (A) ist mit dem Massepotential der Auswerteeinheit (AW) verbunden ;
  d)  eine zusätzliche elektrisch leitende Kappe (ZK) umgibt die Abtasteinrichtung (A) und ist mit dem Massepotential der Auswerteeinheit (AW) verbunden ;
  e)  eine elektrisch leitende Hülse (H) schirmt das freie Ende der Welle (W2a) für die Teilscheibe (T2a) ab und ist mit dem Massepotential der Auswerteeinheit (AW2) verbunden.

2. Meßeinrichtung nach Anspruch 1, dadurch gekennzeichnet, daß die Abtasteinrichtung (A) ein elektrisch leitfähiges Trägerteil (TT) für mehrere Platinen (PT) aufweist und daß das Trägerteil (TT) mittels einer Isolierschicht (SS) im Gehäuse (G) befestigt und mit dem Massepotential der Auswerteeinheit (AW) verbunden ist.

3. Meßeinrichtung nach Anspruch 2, dadurch gekennzeichnet, daß die zusätzliche elektrisch leitende Kappe (ZK) die Platinen (PT) und das Trägerteil (TT) umgibt.

4. Meßeinrichtung nach Anspruch 3, dadurch gekennzeichnet, daß die zusätzliche Kappe (ZK) aus Metall oder aus einem innen metallisierten Kunststoff besteht.

5. Meßeinrichtung nach Anspruch 2, dadurch gekennzeichnet, daß die Platinen (PT1b, PT2b) als Mehrlagenplatinen ausgebildet sind.

6. Meßeinrichtung nach Anspruch 1, dadurch gekennzeichnet, daß das Massepotential als Bezugspotential 0 Volt beträgt.

## Claims

1. Angle measuring system with direct attachment to a driving unit (AE) for measuring the relative angular position of two objects rotatable with respect to one another, wherein the angle graduation of at least one index plate (T) rotatably mounted by means of a shaft (W) is scanned in a housing (G) by a scanning device (A) having at least one scanning element (A2) and an evaluating unit (AW) connected at the output side, and wherein shielding of the scanning device against electrical interference effects is provided, characterised by the combination of the following features :

  a)  the housing (G) is mounted on the driving unit (AE) in electrical contact ;
  b)  the scanning device (A) is fixed in the housing (G) in an electrically insulated state ;
  c)  the scanning device (A) is connected to the earth potential of the evaluating unit (AW) ;
  d)  an auxiliary electrically conductive cap (ZK) surrounds the scanning device (A) and is connected to the earth potential of the evaluating unit (AW) ;
  e)  an electrically conductive sleeve (H) shields the free end of the shaft (W2a) for the index plate (T2a) and is connected to the earth potential of the evaluating unit (AW2).

2. Measuring system according to Claim 1, characterised in that the scanning device (A) has an electrically conductive carrier member (TT) for a plurality of circuit boards (PT) and the carrier member (TT) is secured in the housing (G) by means of an insulating layer (SS) and is connected to the earth potential of the evaluating unit (AW).

3. Measuring system according to claim 2, characterised in that the auxiliary electrically conductive cap (ZK) surrounds the circuit boards (PT) and the carrier member (TT).

4. Measuring system according to claim 3, characterised in that the auxiliary cap (ZK) consists of metal or of an internally metallised plastic.

5. Measuring system according to claim 2, characterised in that the circuit boards (PT1b, PT2b) are constructed as multi-layer circuit boards.

6. Measuring system according to claim 1, characterised in that the earth potential as reference potential is 0 volts.

**Revendications**

1. Dispositif de mesure d'angle monté directement sur une unité d'entraînement (AE) pour la mesure de la position angulaire relative de deux objets mobiles en rotation l'un par rapport à l'autre, dans lequel, à l'intérieur d'un boîtier (G), la graduation angulaire d'au moins un disque gradué (T) entraîné en rotation par un arbre (W) est lue par un dispositif de lecture (A), qui comporte au moins une unité de lecture (AZ) et une unité d'exploitation (AW) montées en aval, et dans lequel il est prévu une protection du dispositif de lecture contre des parasites électriques, **caractérisé** par la combinaison des caractéristiques suivantes :

a) le boîtier (G) est monté sur l'unité d'entraînement (AE) avec contact électrique ;

b) le dispositif de lecture (A) est monté isolé électriquement à l'intérieur du boîtier (G) ;

c) le dispositif de lecture (A) est relié au potentiel de masse de l'unité d'exploitation (AW) ;

d) un capot (ZK) supplémentaire électriquement conducteur entoure le dispositif de lecture (A) et est relié au potentiel de masse de l'unité d'exploitation (AW) ;

e) un manchon (H) électriquement conducteur protège l'extrémité libre de l'arbre (W2a) du disque gradué (T2a) et est relié au potentiel de masse de l'unité d'exploitation (AW2).

2. Dispositif de mesure selon la revendication 1, **caractérisé** en ce que le dispositif de lecture (A) comporte un élément support (TT) électriquement conducteur pour plusieurs platines (PT) et en ce que l'élément support (TT) est fixé à l'intérieur du boîtier (G) par l'intermédiaire d'une couche isolante (SS) et est relié au potentiel de masse de l'unité d'exploitation (AW).

3. Dispositif de mesure selon la revendication 2, **caractérisé** en ce que le couvercle supplémentaire (ZK) électriquement conducteur entoure les platines (PT) et l'élément support (TT).

4. Dispositif de mesure selon la revendication 3, **caractérisé** en ce que le couvercle supplémentaire (ZK) est composé de métal ou d'une matière plastique métallisée intérieurement.

5. Dispositif de mesure selon la revendication 2, **caractérisé** en ce que les platines (PT1b, PT2b) sont réalisées sous forme de platines multicouches.

6. Dispositif de mesure selon la revendication 1, **caractérisé** en ce que le potentiel de masse est 0 volt comme potentiel de référence.

## Fig.1

## Fig.3

Fig. 2

EP 0 347 543 B1